# EUROPEAN PATENT SPECIFICATION

(11) **EP 3 608 301 B1**
(45) Date of publication and mention of the grant of the patent: **15.02.2023**
(21) Application number: 19188232.3
(22) Date of filing: 25.07.2019
(51) Int. Cl.: A01G 24/20, A01G 24/60, C05F 11/02, C05F 11/06, C05F 11/08

(54) **METHOD FOR MANUFACTURING OF A GROWING MEDIUM**
VERFAHREN ZUR HERSTELLUNG EINES WACHSTUMSMEDIUMS
PROCÉDÉ DE FABRICATION D'UN MILIEU DE CULTURE

(30) Priority: 08.08.2018 FI 20185676
(43) Date of publication of application: 12.02.2020
(73) Proprietor: Suomen Biokiertotuote Oy, 21500 Piikkiö (FI)
(72) Inventor: Kivioja, Martti, 21200 Raisio (FI)
(74) Representative: Aaltonen, Janne Lari Antero

(56) References cited:
- WO-A2-2012/170231
- US-A1- 2017 217 848
- US-A1- 2018 194 698

## Description

### TECHNICAL FIELD

The invention discloses a method for manufacturing of a growing medium out of biowaste. In the method, biowaste is crushed and mixed to selected raw materials in an appropriate manner.

### BACKGROUND OF THE INVENTION

In agriculture, greenspace maintenance and plant production, considerable amounts of biowaste, i.a. weeding waste, growth waste (e.g. seedlings of tomatoes and cucumbers, etc.), threshing waste, cuttings etc. is produced. Typically, such waste cannot be spread to the lawn or the field as such, or be used as a growing medium. Usually, the waste is collected to a compost, and composting is begun in order to transform the waste into soil. Often, the waste is left completely unutilized.

The waste can be composted on site, or it can be transported elsewhere for composting. However, a compost typically needs maintenance, it needs for example turning and aerating. This requires both work and energy, and additionnally, the process is rather slow, thus if great amounts of waste are produced, considerable space is needed for composting. Furthermore, if the waste contains for example catering waste, pest like rats are a possible nuisance. Some methods for manufacturing a growing medium utilizing organic wastes are disclosed in US 2017/217848 A1, US 2018/194698 A1 and WO 2012/170231 A2.

### OBJECTS OF THE INVENTION AND SUMMARY

An object of the invention is thus to provide a method for manufacturing of a growing medium, with which method biowaste is directly usable as a growing medium, for example as such or spread on a field. It is particularly advantageous that a growing medium manufactured with a method according to the invention has no problems according to the prior art. Furthermore, an apparatus for implementing the method of the invention is further disclosed.

This object is achieved with the method according to the invention for manufacturing of a growing medium, the method comprising
- feeding biomass and biochar to a crusher,
- feeding a probiotic solution and the mixture obtained from the crusher, having a particle size of less than 25 mm, to a conveyor,
wherein the particle size of the biochar is 0.01-2.5 mm and the biochar is used in an amount of 0.05-7 vol-% of the biomass; the probiotic solution comprises lactic bacteria, photosynthesis bacteria and at least one yeast, and the probiotic solution is used in an amount of 0.1-2 vol-% of the biomass, and wherein a distillate obtained from a manufacture of the biochar is additionally fed to the crusher and/or the conveyor.

### BRIEF DESCRIPTION OF THE DRAWINGS

Figure 1 schematically illustrates an apparatus for carrying out an embodiment of the method of the present invention in its operating position.
Figure 2 illustrates the apparatus according to Figure 1 in its transport position.
Figure 3 illustrates a separator according to an embodiment used for carrying out the method.
Figure 4 illustrates a blade profile of a crusher according to an embodiment used for carrying out the method.
Figure 5 illustrates a structure of a screw conveyor according to an embodiment used for carrying out the method.

### DETAILED DESCRIPTION OF THE INVENTION

An object of the invention thus is a method for manufacturing of a growing medium, the method comprising
- feeding biomass and biochar to a crusher,
- feeding probiotic solution and a mixture obtained from the crusher, having a particle size of less than 25 mm, to a conveyor,
wherein the particle size of which biochar is 0.01-2.5 mm and biochar is used in an amount of 0.05-7 vol-% of the biomass; the probiotic solution comprises lactic bacteria, photosynthesis bacteria and at least one yeast, and the probiotic solution is used in an amount of 0.1-2 vol-% of the biomass, and wherein a distillate obtained from a manufacture of the biochar is additionally fed to the crusher and/or the conveyor.

An object of the invention is thus a method in which the biomass is crushed and it is mixed with a probiotic solution and biochar. The product thus obtained can be used for example as a growing medium, or it can be spread on the lawn or on the field as a fertilizer and as a soil improvement material. The product can for example be packed into sales packages and/or grow bags.

The conveyor is typically a crushing screw conveyor having at least one cutting blade, or a belt conveyor.

The funtionality of the product manufactured with the method is affected by i.a. the particle size of the biomass, i.e. how fine the biomass is crushed. The particle size of the mixture obtained from the crusher is less than 25 mm. According to an embodiment, the particle size of the mixture obtained from the crusher is less than 10 mm. The particle size of the mixture obtained from the crusher can thus for example be from 0.1; 0.2; 0.5; 0.8; 1; 1.3; 1.5; 2; 2.6; 3; 3.2; 3.6; 4; 5; 5.5; 6; 6.2; 6.8; 7; 8 or 9 mm up to 1; 1.3; 1.5; 2; 2.6; 3; 3.2; 3.6; 4; 5; 5.5; 6; 6.2; 6.8; 7; 7.5; 8; 8.5; 9; 9.5; 10; 10.5; 11; 11.5; 12; 12.5; 13; 13.5; 14; 14.5; 15; 15.5; 16; 16.5; 17; 17.5; 18; 18.5; 19; 19.,5; 20; 20.5; 21; 21.5; 23; 23.5; 24; 24.5 or 25 mm. Particle size means the greatest dimension of the particle, and the particle size can be defined for example by sieving.

When a screw conveyor is used, the particle size does not change in practice in the screw conveyor, but rather mixing happens there. The cutting blades of the screw conveyor make it possible that a moist material does not form cakes, but stays as a material according to the object of the invention. If the method and the apparatus were used without a separator, the particle size of the material would decrease in the screw conveyor typically by 5-10 % of what it is when exiting the crusher.

Furthermore, the content, the amount and the concentration of the probiotic solution to be added, as well as the amount of the biochar to be used have an effect. If support materials are used, naturally also their amount has an effect on the end result. The amounts needed and the possible support materials depend also to some extent on the biomass being used. Properties of the growing medium are i.a. its efficacy and growing power, and it further needs to be free from plant diseases. These can be measured chemically (for example by analyzing the nutrients and plant diseases contained in the growing medium) as well as by germinability tests and/or cultivation tests.

A distillate obtained from the manufacture of biochar is an acid that is formed during pyrolysis.

According to an embodiment, at least one support material is thus additional fed to the crusher and/or the conveyor. The support material can be selected from a group consisting of dystrophic bog water, bryophyte, peat, soil, gravel, sand, phosphorus, zinc, nitrogen, ferric chelates and manganese. When using bog water, it can be added to the probiotic solution or used separately. Also, a mixture of bog water and the above-mentioned distillate can be used, for example a mixture with a 50:50 ratio. Alternatively, the mixture can contain for example 30-70 vol-% of bog water and 70-30 vol-% of distillate.

The amount of the support material can be for example 0.01-0.15 vol-% of the amount of the biomass. The amount of the support material can thus be from 0.01; 0.02; 0.03; 0.05; 0.07; 0.09; 0.10 or 0.12 vol-% up to 0.03; 0.05; 0.07; 0.09; 0.10; 0.12; 0.14 or 0.15 vol-%.

When using a belt conveyor, all solid raw materials can be added to the crusher via the funnel, either all via a same feeding funnel or via separate feeding funnels. The liquid probiotic solution can be then for example vaporised on the belt conveyor. Alternatively, all raw materials can be fed to the crusher via a feeding funnel.

The biochar to be used in the method is a porous, clean organic product that has typically been made with pyrolysis. The biochar can be made of any wood material, typically of willow, birch, aspen or spruce. The biochar is typically in powder form. The particle size of the biochar is 0.01-2.5 mm and it is used for 0.05-7 vol-% of the biomass. According to an embodiment, the particle size of the biochar is 0.3-0.5 mm. The particle size of the biochar can thus be for example from 0.01; 0.02; 0.05; 0.08; 0.1; 0.13; 0.15; 0.2; 0.26; 0.3; 0.32; 0.36; 0.4; 0.5; 0.55; 0.6; 0.62; 0.68; 0.7; 0.8; 0.9, 1.0; 1.3; 1.5 or 2.0 mm up to 0.1; 0.13; 0.15; 0.2; 0.26; 0.3; 0.32; 0.36; 0.4; 0.5; 0.55; 0.6; 0.62; 0.68; 0.7; 0.8; 0.9, 1.0; 1.3; 1.5; 2.0; 2.1; 2.3 or 2.5 mm. The biochar is used for example for, starting from 0.05, 0.1; 0.13; 0.15; 0.2; 0.26; 0.3; 0.32; 0.36; 0.4; 0.5; 0.55; 0.6; 0.62; 0.68; 0.7; 0.8; 0.9, 1.0; 1.3; 1.5; 2.0; 2.1; 2.3; 2.5; 3.0; 3.5; 4.0; 4.5; 5.0; 5.2; 5.4; 5.5; 5.7; 5.9; 6.0; 6.2 or 6.5 vol-% up to 0.5; 0.55; 0.6; 0.62; 0.68; 0.7; 0.8; 0.9, 1.0; 1.3; 1.5; 2.0; 2.1; 2.3; 2.5; 3.0; 3.5; 4.0; 4.5; 5.0; 5.2; 5.4; 5.5; 5.7; 5.9; 6.0; 6.2; 6.5; 6.7 or 7.0 vol-% of the biomass. This particle size refers to the particle size before the biochar is used in the method.

According to an embodiment of the invention, a biomass is selected from a group consisting of catering waste, animal droppings, used growing medium, peat, bryophyte, soil, compost, waste from food industry, waste from a biogas plant, plant waste and their mixtures. Plant waste can for example be weeding waste, growth waste, threshing waste, tree branch waste, raking waste and their mixtures.

Reusable biowastes are thus among others:
- various growing media, peat, bryophyte, soil, composts
- animal manure and slurries
- catering waste
- mashes from breweries
- waste from biogas plants
- threshing waste
- various litter
- raking waste
- tops, stems, roots etc. of plants
- various berries that cannot be used as food

Biowaste can also contain for example hemp string that has been used in agriculture. With the apparatus according to the invention even it can be chopped so fine that it decomposes rapidly and does not cause problems in the end product. Additionnally, new, fresh peat or bryophyte can be added to the crusher.

According to an embodiment, the growing medium to be obtained does not contain any biowaste at all, but only peat, bryophyte or peat/bryophyte mixture in a ratio of 80/20. It is thus possible to use the apparatus and the method according to the invention also for manufacturing of such a growing medium that does not contain biowaste but other biomass. In this case, instead of biowaste, peat and optionally bryophyte is used. Such growing medium does not typically need an analysis certificate for plant diseases, like the growing media utilizing biowaste when they are redistributed (typically the farmer can use his own plant-based waste for his own use without analyses).

The probiotic solution being used inhibits the formation of harmful bacteria and microbes. The probiotic solution contains both aerobic bacteria and anaerobic bacteria that boost i.a. the compostation and work in anaerobic conditions, whereby the compost does not need to be turned. The composting time is thus halved compared to the situation in which the probiotic solution is not used.

The probiotic solution is made for example by fermenting raw materials in an anaerobic container. In the manufacture of the probiotic solution, it is thus possible to use for example the following raw materials.

Probiotic mixture:
- lactic bacterium *Lactobacillus casei,* amount >10⁵ pmy/g, ATCC 7469;
- lactic bacterium *Lactobacillus plantarum,* amount >10⁵ pmy/g, ATCC 8014;
- yeast *Saccharomyces cerevisiae,* amount >10³ pmy/g, IFO 0203; and
- photosynthesis bacterium *Rhodopseydomonas palustris* amount >10³ pmy/g, ATCC 17001.

This mixture is added in an amount of 70 litres to 900 litres of UV filtered water, and further 30 litres of sugar cane molasses is added to the mixture. After this, the mixture can be arranged to an air-tight and sterile container, from which the formed gas is removed through an air lock. During the manufacturing process, the temperature is typically kept at a temperature of about +35-38 °C, and the processing time is 3.5-4 weeks.

In the following, some possible mixing ratios are presented for various purposes of use.

A growing medium suitable for market gardens and the like can be manufactured with the disclosed method by using the following raw materials
- 1 m³ of used growing medium;
- 2-5 I of probiotic solution;
- 10-15 I of biochar, the preferred particle size being 0.3-0.5 mm; and
- 0.5-0.8 I of a mixture of dystrophic peat water and biochar distillate in ratio of 50/50.

Other support materials can be added as needed, like phosphorus, zinc, manganese etc., in an amount of 0.1-0.3 I. Studies have shown that with these mixing ratios, a well functioning, nutritious growing medium that is free from plant diseases is obtained of a used growing medium, i.a. for growing cucumber and tomatos.

A growing medium suitable for golf courses and corresponding green fields can be manufactured with the disclosed method by using the following raw materials
- 1 m³ aeration and mowing waste; aeration waste is formed in connection with the mechanical aeration of greens and fairways. Mowing waste is formed in the mowing of greens, fairways and roughs and in other operations related to the maintenance/landscaping of the course;
- 3-5 I of probiotic solution;
- 25-35 I of biochar; and
- 0.3-0.5 I of a mixture of dystrophic peat water and biochar distillate in a ratio of 50/50.

Other support materials can be added as needed, such as ferric chelates, nitrogen, etc., in an amount of 0.5-1 I. User experiences have shown that with these mixing ratios, a well functioning and nutritious growing medium that is free from plant diseases is obtained out of the biowaste formed in the maintenance of a golf course. Additionnally, a mixture can be used that has for example 1.0 m³ of biowaste, 5-6 l of probiotic solution and 60-70 l of biochar.

The end product obtained with the method can be spread directly on the field, or it can be mixed to the field soil by ploughing or by harrowing. Alternatively, the end product can be windrowed, for it is composted also in anaerobic conditions. The above-mentioned end product utilizing mowing waste of golf courses can be spread directly back on a golf course.

If it is noticed that a growing medium contains plant diseases coming from biowaste, the growing medium can be further retreated with the probiotic solution. In this case, even a solution of 100 % can be used, the normal concentration being typically about 10 % (i.e. the probiotic solution obtained above is diluted to a concentration of 10 %). Indeed, according to an embodiment, the concentration of the probiotic solution is 5-25 %, the rest of the probiotic solution being water or the like. The concentration of the probiotic solution can thus be for example from 5, 7, 9, 10, 12, 15, 18 or 20 % up to 7, 9, 10, 12, 15, 18, 20, 22 or 25 %. Additionnally or alternatively, when using recycled biomass for commercial use (i.e. to be used elsewhere than again in the biomass production place), the material treated with the method is to be composted for a sufficiently long time in a windrow, where its temperature rises to 40-60 degrees, whereby various plant diseases and harmful bacteria die. The probiotic solution used in the method and especially its anaerobic bacteria are an essential part of efficient composting, as disclosed above.

According to an embodiment, the method for manufacturing a growing medium comprises steps of
- feeding biomass and biochar to a crusher (100),
- feeding a probiotic solution and a mixture obtained from the crusher, having a particle size of less than 25 mm, to a crushing screw conveyor, which screw conveyor contains at least one cutting blade,
the particle size of which biochar is 0.01-2.5 mm and the biochar is used in an amount of 0.05-7 vol-% of the biomass; the probiotic solution comprises lactic bacteria, photosynthetic bacteria and at least one yeast, and the probiotic solution is used in an amount of 0.1-2 vol-% of the biomass, and wherein a distillate obtained from a manufacture of the biochar is additionally fed to the crusher and/or the screw conveyor.

The following apparatus and its embodiments are not part of the invention. However, the apparatus and its embodiments are used for carrying out the method of the present invention and therefore described for better understading.

An apparatus for manufacturing of a growing medium, which apparatus comprises
- a crusher,
- a biomass feeding funnel connected to the crusher,
- a biochar feeding funnel connected to the crusher,
- a separator based on particle size, arranged after the crusher,
- a continuous weighing device for weighing the particles coming from the separator,
- a conveyor for transporting the weighed particles,
- a liquid inlet for feeding a probiotic solution to the conveyor,
- at least one humidity sensor at the weighing device or in the beginning of the conveyor,
- at least one humidity sensor at the end part of the conveyor, and
- control means for controlling the apparatus based on the measurement data produced by the weighing device and the humidity sensors,
the apparatus further comprising an inlet for feeding a distillate obtained from amanufacture of the biochar to the crusher and/or the conveyor.

Depending on the targeted use, the requirements for the end product are different. For example, on golf courses, the end product needs to be very fine-grained, whereas in general composting, a coarser end result is enough. Also, the properties of the starting material and its humidity vary essentially depending on the situation. This is why the biomass to be treated is ground in the apparatus in up to three or four different places and the degree of grinding can be adjusted. Grinding occurs in the crusher, the separator, the screw conveyor (up to a limited extent when used) and the discharge screw (when such is used).

According to an embodiment, the conveyor is a crushing screw conveyor comprising at least one cutting blade for mixing the crushed particles. According to another embodiment, the conveyor is a belt conveyor, and the liquid inlet for feeding the probiotic solution to the conveyor comprises a spraying nozzle.

The crusher to be used in the apparatus is preferably a so-called efficient coarse crusher that can crush, due to its blade profile, growing media, wood material as well as long and tough plant parts for further processing. The crusher can for example comprise two separate crusher parts that have been arranged against each other and to work together. Their tilt angles are preferably symmetrical, and the cutting blades can comprise for example clawlike protrusions to improve crushing and cutting efficiency. An example of a suitable cutting blade is presented below in the figures.

The biochar feeding funnel can be attached to the crusher or the screw conveyor (when it is used), typically to its beginning. All feeding inlets to be used in the apparatus preferably comprise the required valve arrangements. Especially preferably, the valves can be controlled by control means, i.e. the apparatus functions automatically or semiautomatically.

Typically, solid raw materials are added to the crusher and liquid and/or paste-like raw materials to the screw conveyor (when it is used). Alternatively, if the solid raw material is already homogeneous, i.e. the particle size is in the desired range, even a solid raw material can be fed directly to the screw conveyor or the belt conveyor. The length of the screw conveyor is for example 4 m. The length of the belt conveyor is selected to be suitable for the intended use. The conveyor can comprise also other sensors than humidity sensors, such as for example thermometers, manometers and the like.

The screw conveyor has at least one, typically several cutting blades, thus it also functions as a mixer and a crusher (to a limited extent, typically only for large particles) in addition to being a conveyor. According to an embodiment, the helices of the screw can have sharpenable blade parts attached on them. The rotational speed of the screw conveyor can be for example 40-100 rpm, the speed depending on the biomass to be used. Most typically, the apparatus comprises one screw conveyor, but there can also be several if so desired, such as two or three, either arranged side by side or consecutively.

Control means typically control the feeding amounts and speeds of the raw materials, as well as the speed of the crusher and/or the conveyor. According to an embodiment, control means control at least one of biomass feed rate, feed amount of biomass, biochar feed rate, feed amount of biochar, feed amount of probiotic solution, feed rate of probiotic solution, operating speed of crusher and speed of the conveyor, in case of a screw conveyor its rotational speed. Typically, these are based on a desired end product as well as on humidity of the mass in various phases of the apparatus. The apparatus thus is typically programmable, and especially preferably it comprises programs for different biomasses and end product specifications.

The apparatus may also comprise means for transmitting measurement data to a separate server that controls the apparatus. Then, the apparatus thus comprises means for transmitting measurement data and for receiving control commands. The data transfer may happen with a wire or wirelessly. Measurement data and optionally data on how the apparatus is controlled and what the effect of the control is to the end product (for example its humidity) can also be collected to a database, for example to a cloud, and it can be monitored and used for client management as well as activity planning and monitoring.

According to an embodiment, the apparatus further comprises means for transferring material that has not passed the separator (i.e. that is impassable through the separator) to the biomass feeding funnel. This so-called return screw preferably functions like a screw conveyor by preparing the waste returning to the crusher again.

The apparatus also comprises a separator that is based on the particle size. Preferably, the separator is a sieve structure. Especially preferably, the separator is an adjustable sieve structure that grinds the challenging dry materials when needed.

According to an embodiment, the separator is thus a sieve. Especially preferably, the sieve comprises a changeable lower grate, an upper grate and sliding rails of the upper grate. The distance between the grates is adjustable depending on the material to be treated. The surfaces of the grates facing one another thus also function as cutting surfaces.

The mass comes through the upper grate that is in a back and forth movement. The sharp edges of the grates grind the material to be treated and the sufficiently ground mass goes through the lower grate further to the mixing screw. The mass not passing through the lower grate moves along the surface of the lower grate to the return screw and further to be recrushed. The lower grate is especially preferably changeable and the mesh size of thegrate used depends on the mass to be treated.

According to an embodiment, a sieve thus consists of an upper grate moving back and forth and a changeable lower grate. Both grates can be manufactured of crossed vertically welded flat iron bars and the opposite surfaces of the grates sharpened so that the edge of each bar becomes a cutting edge. The upper grate can be attached to an angle iron frame having a guide bar on two sides. The guide bar can be attached in one end by means of an articulation to a connecting rod coming from an operating device, for example an electric motor, by means of which rod the back and forth movement of the upper grate is achieved. Alternatively, a hydraulic energy source may be used.

The guide bars slide preferably between plastic wear parts that in turn are attached to a body of the upper part of the sieve. The clearance between the upper grate and the lower grate can be adjusted according to the material to be treated with the help of adjustment screws by means of which the body of the upper grate is attached to a solid body of the whole device.

The lower grate that is changeable depending on the material to be treated, can also be placed to an angle iron frame which in turn is attached to a body of the lower part of the sieve. The body of the lower part of the sieve can be attached by means of coil springs to the solid body of the whole device.

The biomass to be treated comes thus from the crusher through a sufficiently sparse upper grate. The material allowed by the mesh size of the lower grate goes through the lower grate to the mixing screw and the mass not passing through the lower grate remains between the grates.

The back and forth movement of the upper grate grinds the inbetween remaining mass until it either goes through the lower grate or is transferred due to the movement of the upper grate to the feeding funnel of the return screw and therethrough further to be recrushed.

If the lower grate is supported by coil springs to the body of the whole sieve, the back and forth movement of the upper grate and the mass between the grates make the lower grate function also as a vibrator, which helps both the passing of the mass through the lower grate and the transfer of the non-passing mass to the feeding funnel of the return screw.

The size of the lower sieves to be used can be, depending on the targeted use, for example
- for reworking of used growing media from plant gardens, the optimal sieve size is 1-2.5 cm;
- for aeration waste of golf and other green areas that is spread on the greens, the optimal sieve size is 6-8 mm; and
- for mowing waste that is spread on fairways, on a rough and again on a new growing medium, the optimal sieve size is 0.8-1.5 cm.

According to an embodiment, the separator is arranged to transfer to the weighing device particles having the size of less than 25 mm.

According to an embodiment, the separator is thus a sieve that comprises a lower grate, a substantially parallel upper grate arranged at a distance from the lower grate, which upper grate is arranged to be movable in the transversal direction. Preferably, the lower grate is arranged to be changeable and the distance is arranged to be adjustable.

According to another embodiment, the apparatus further comprises at least one of a group containing wheels, outriggers, at least one vibrator of a feeding funnel, lifting means, a generator and means for bagging of the end product. Naturally, the apparatus can also comprise several of these accessories. Especially preferably, outriggers are adjustable. Furthermore, according to a preferred embodiment, the screw conveyor can be moved from a transport position to an operating position and vice versa, i.e. the apparatus can be arranged to a position in which it takes as little space as possible for transport and storage.

The biomass to be treated is typically fed to the apparatus with a tractor, a wheel loader or in some other appropriate way via a feeding funnel, from where the mass runs gravitationally or by vibrating to the crusher. Under the crusher, there is a special separator, i.e. a sieve structure, that grinds further the mass that has passed the crusher, and the mass that passes it moves via a continously weight measuring weighing device to a feeding funnel of a conveyor. The weighing device gives continuous data of the mass entering the conveyor to control means, typically a control centre, that controls at an appropriate precision the dosaging of the probiotic solution so that from the container of the probiotic solution, an optimum amount of probiotic solution is continously transferred to the conveyor through a piping. The control centre also controls, on the basis of the data from the weighing device, the dosaging of a solid additive, for example biochar, from the container via a dosaging pipe to the feeding funnel of the mixing screw, or alternatively to the crusher. The mass not passing the sieve is transferred from the upper side of the sieve via a separate feeding device back to the biomass feeding funnel and to be recrushed.

A measuring device comprising a humidity sensor measures the humidity of the crushed mass in the beginning of the conveyor and another measuring device comprising a humidity sensor at the end part of the conveyor measures the humidity of the mixed mass. Both data are transferred to the control centre which on this basis specifines the dosaging of the probiotic solution and the speed or rotational speed of theconveyor.

As a part of the apparatus, there can be a jib crane or some other appropriate lifting means with which the containers of the solid additive and of the probiotic solution can be filled irrespective of the means available on site.

The apparatus further comprises preferably a self-supporting body structure to which all devices required by the process have been placed as a production line. The body structure is especially preferably placed on a movable platform. In operating position, safe working is ensured with the help of adjustable outriggers. The construction has been designed so that the apparatus is easy and quick to change from a compact transport position to an operating position and vice versa.

The apparatus works typically with power current, and so that the current supply does not limit the use of the apparatus, one can build an own generator that can be used if the mains current is not available.

It is clear to a person skilled in the art that the crusher, mixer and transfer apparatuses can be used with different types of technical solutions according to need and situation, also the movability can be accomplished either as disclosed here, as a container solution, by placing the apparatus on a truck platform or in some other way required by the situation. If need be, the solution can naturally be implemented as installed fixedly to production facilities.

According to an embodiment the apparatus for manufacturing a growing medium comprises
- a crusher,
- a biomass feeding funnel connected to the crusher,
- a biochar feeding funnel connected to the crusher,
- a separator based on the particle size, arranged after the crusher,
- a continous weighing device for weighing the particles coming from the crusher,
- a crushing screw conveyor comprising at least one cutting blade, for mixing the weighed particles,
- a liquid inlet for feeding a probiotic solution to the screw conveyor,
- at least one humidity sensor at the weighing device or in the beginning of the screw conveyor,
- at least one humidity sensor at the end part of the screw conveyor, and
- control means for controlling the apparatus based on the measurement data produced by the weighing device and the humidity sensors,
the apparatus further comprising an inlet for feeding a distillate obtained from amanufacture of the biochar to the crusher and/or the screw conveyor.

### DETAILED DESCRIPTION OF THE FIGURES

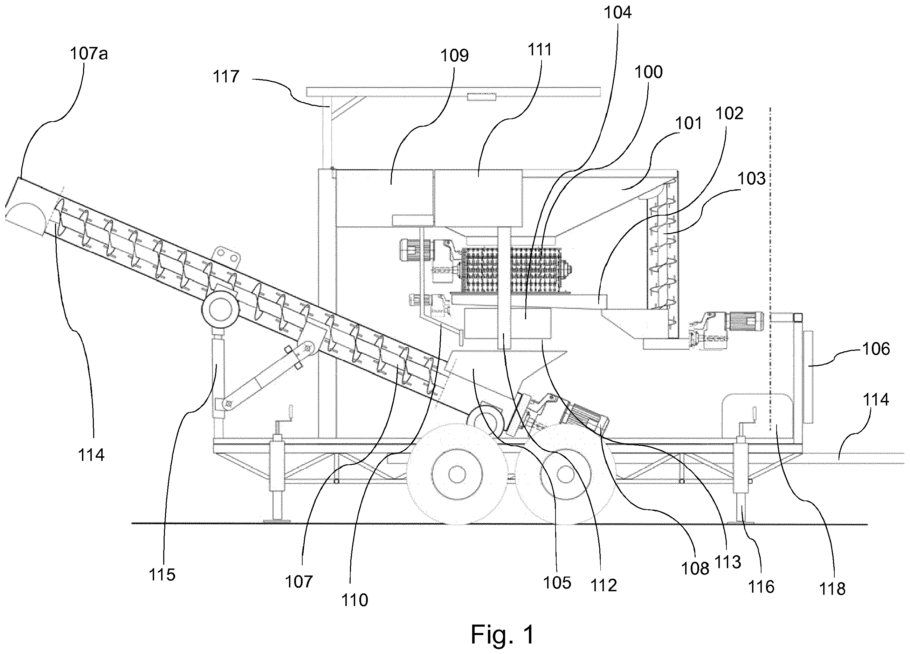

Figure 1 shows schematically an apparatus for carrying out an embodiment of the method of the present invention in its operating position. The apparatus comprises a crusher 100, and a biomass feeding funnel 101, connected to it, arranged above it. Biomass is poured to the feeding funnel 101, whereafter it is crushed with the crusher 100. The crushed biomass is sieved with a separator, i.e. in this case with a sieve 102. Too big pieces are returned to the feeding funnel 101 via a return screw 103. The sieved, crushed biomass is weighed with a continuous weighing device 104. The measument data is delivered to control means 106, here a computer. The sieved biomass is led by means of a funnel 105 to a crushing screw conveyor 107 that also mixes the biomass. The speed of the screw conveyor 107 is controlled by a motor 108.

To the crushed biomass, probiotic solution and biochar is mixed according to the guiding by the control means 106. The mixing is done by feeding probiotic solution from a probiotic container 109 via a piping 110 and biochar from a biochar feeding funnel 111 via a piping 112 through the funnel 105 to the screw conveyor. Humidity of the biomass is measured with a humidity sensor 113 at the weighing device 104, and the humidity of the end product is measured with a humidity sensor 114 at the end of the screw conveyor 107. These measurement data are led to the control means 106 that control the process based on the data. The finished growing medium exits the other end 107a of the screw conveyor 107.

The apparatus is arranged on a movable platform 114, and it comprises in this embodiment a self-supporting body structure 115 and adjustable outriggers 116. The apparatus further comprises lifting means 117, in this case a jib crane. The apparatus further comprises a generator 118.

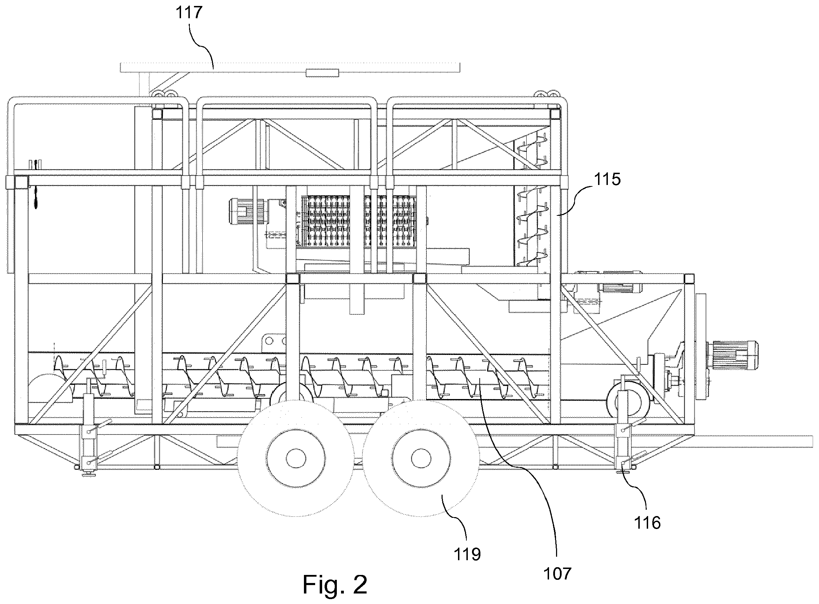

Figure 2 shows the apparatus according to Figure 1 in its transport position. The Figure shows how the screw conveyor 107 has been moved into transport position inside the body structure 115, and the lifting means 117 have been lowered down. Correspondingly, adjustable outriggers 116 have been lifted up so that the apparatus is supported on wheels 119.

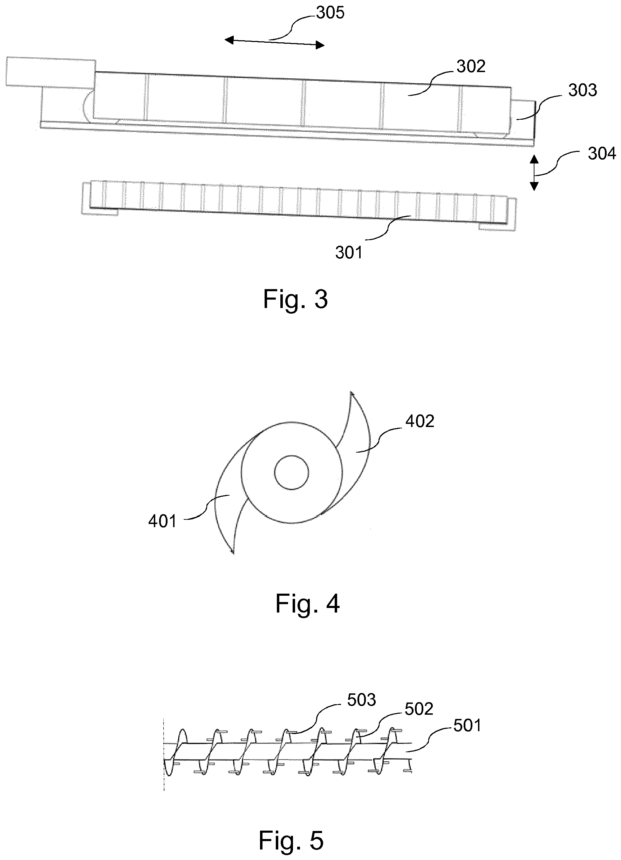

Figure 3 shows a separator according to an embodiment used for carrying out the method. In the separator, there is a lower grate 301 which preferably is changeable so that the particle size of the biomass passing through the separator can be adjusted. The separator further comprises an upper grate 302 as well as sliding rails 303 of the upper grate. The upper grate 302 is arranged at a distance from the lower grate 301, essentially parallel to it. It is possible to change this distance in the directions shown by an arrow 304. The biomass enters the separator above the upper grate 302, and the upper grate 302 moves sideways (in directions shown by an arrow 305).

Figure 4 shows a blade profile of a crusher according to an embodiment used for carrying out the method. Cutting blades 401, 402 of the crusher can be seen in the Figure. These blades have been arranged several side by side and successively as a plate-like crushing plane, and these planes have been arranged two side by side so that the cutting blades of the different planes are overlapping in relation to each other. There can be one or more crushing planes.

Figure 5 shows a structure of a screw conveyor according to an embodiment used for carrying out the method. Grooves 502 have been arranged to the body 501 of the screw conveyor, and blade pieces 503 have been attached to these grooves to improve cutting and crushing.

## Claims

1. A method for manufacturing a growing medium, the method comprising
- feeding biomass and biochar to a crusher (100),
**characterized in that** the method further comprises
- feeding a probiotic solution and a mixture obtained from the crusher, having a particle size of less than 25 mm, to a conveyor,
the particle size of which biochar is 0.01-2.5 mm and the biochar is used in an amount of 0.05-7 vol-% of the biomass; the probiotic solution comprises lactic bacteria, photosynthetic bacteria and at least one yeast, and the probiotic solution is used in an amount of 0.1-2 vol-% of the biomass, and wherein a distillate obtained from a manufacture of the biochar is additionally fed to the crusher (100) and/or the conveyor.

2. A method according to claim 1, wherein the conveyor is selected from a group consisting of a crushing screw conveyor (107), which screw conveyor contains at least one cutting blade and a belt conveyor.

3. A method according to claim 1 or 2, wherein the crusher (100) and/or the conveyor is further fed with at least one support material that is selected from a group consisting of dystrophic bog water, bryophyte, soil, gravel, sand, peat, phosphorus, zinc, nitrogen, ferric chelates and manganese.

4. A method according to claim 3, wherein the amount of the support material is 0.01-0.15 vol-% of the amount of the biomass.

5. A method according to any of the previous claims, wherein the biomass is selected from a group consisting of catering waste, animal droppings, used growing medium, peat, bryophyte, soil, compost, waste from food industry, waste from a biogas plant, plant waste and their mixtures.

6. A method according to claim 5, wherein the plant waste is selected from a group consisting of weeding waste, growth waste, threshing waste, tree branch waste, raking waste and their mixtures.

7. A method according to any of the previous claims, wherein the particle size of the mixture obtained from the crusher (100) is less than 10 mm.

## Patentansprüche

1. Verfahren zum Herstellen eines Nährmediums, das Verfahren umfassend
- Zuführen von Biomasse und Biokohle zu einem Brecher (100),
**dadurch gekennzeichnet, dass** das Verfahren ferner umfasst
- Zuführen einer probiotischen Lösung und einer Mischung, die aus dem Brecher erhalten wird, die eine Partikelgröße von weniger als 25 mm aufweist, zu einem Förderer,
wobei die Partikelgröße der Biokohle 0,01-2,5 mm beträgt und die Biokohle in einer Menge von 0,05-7 Vol.-% der Biomasse verwendet wird; wobei die probiotische Lösung Milchbakterien, photosynthetische Bakterien und mindestens eine Hefe umfasst und die probiotische Lösung in einer Menge von 0,1-2 Vol.-% der Biomasse verwendet wird und wobei ein Destillat, das aus einer Herstellung der Biokohle erhalten wird, zusätzlich zu dem Brecher (100) und/oder dem Förderer zugeführt wird.

2. Verfahren nach Anspruch 1, wobei der Förderer aus einer Gruppe ausgewählt ist, bestehend aus einem Brechschneckenförderer (107), wobei der Schneckenförderer mindestens eine Schneideklinge und einen Bandförderer enthält.

3. Verfahren nach Anspruch 1 oder 2, wobei der Brecher (100) und/oder der Förderer ferner mit mindestens einem Trägermaterial, das aus einer Gruppe ausgewählt ist, bestehend aus dystrophem Sumpfwasser, Moos, Erdboden, Kies, Sand, Torf, Phosphor, Zink, Stickstoff, Eisenchelaten und Mangan, zugeführt wird.

4. Verfahren nach Anspruch 3, wobei die Menge des Trägermaterials 0,01-0,15 Vol.-% der Menge der Biomasse beträgt.

5. Verfahren nach einem der vorstehenden Ansprüche, wobei die Biomasse aus einer Gruppe ausgewählt ist, bestehend aus Speiseabfall, Tierkot, verwendetem Nährmedium, Torf, Moos, Erdboden, Kompost, Abfall aus Lebensmittelindustrie, Abfall aus einer Biogasanlage, Pflanzenabfall und deren Mischungen.

6. Verfahren nach Anspruch 5, wobei der Pflanzenabfall aus einer Gruppe ausgewählt ist, bestehend aus Unkrautjätabfall, Nährabfall, Dreschabfall, Baumastabfall, Rechenabfall und deren Mischungen.

7. Verfahren nach einem der vorstehenden Ansprüche, wobei die Partikelgröße der Mischung, die von dem Brecher (100) erhalten wird, weniger als 10 mm beträgt.

## Revendications

1. Procédé de fabrication d'un milieu de croissance, le procédé comprenant
- l'alimentation de biomasse et de biocharbon vers un broyeur (100),
**caractérisé en ce que** le procédé comprend en outre :
- l'alimentation d'une solution probiotique et d'un mélange obtenu à partir du broyeur, ayant une taille de particules inférieure à 25 mm, à un transporteur,
la taille de particule dont le biocharbon est de 0,01 à 2,5 mm et le biocharbon est utilisé en une quantité de 0,05 à 7 % de la biomasse ; la solution probiotique comprend des bactéries lactiques, des bactéries photosynthétiques et au moins une levure, et la solution probiotique est utilisée en une quantité de 0,1 à 2 % de la biomasse, et dans lequel un distillat obtenu à partir d'une fabrication du biocharbon est en outre alimenté au broyeur (100) et/ou au transporteur.

2. Procédé selon la revendication 1, dans lequel le transporteur est choisi dans un groupe constitué d'un transporteur à vis de broyage (107), lequel transporteur à vis contient au moins une lame de coupe et un transporteur à courroie.

3. Procédé selon la revendication 1 ou 2, dans lequel le broyeur (100) et/ou le transporteur sont en outre alimentés avec au moins un matériau de support qui est choisi dans un groupe constitué d'eau de tourbière dystrophique, de braphyphyte, de sol, de gravier, de sable, de tourbe, de phosphore, de zinc, d'azote, de chélates ferriques et de manganèse.

4. Procédé selon la revendication 3, dans lequel la quantité de la matière de support est de 0,01 à 0,15 % en volume de la quantité de la biomasse.

5. Procédé selon l'une quelconque des revendications précédentes, dans lequel la biomasse est choisie dans un groupe constitué de déchets de restauration, de déjections animales, de milieu de croissance utilisé, de tourbe, de braphyphyte, de terre, de compost, de déchets de l'industrie alimentaire, de déchets d'une installation de biogaz, de déchets végétaux et de leurs mélanges.

6. Procédé selon la revendication 5, dans lequel les déchets végétaux sont choisi dans un groupe constitué par les déchets de désherbage, les déchets de croissance, les déchets de battage, les déchets de branches d'arbre, les déchets de ratissage et leurs mélanges.

7. Procédé selon l'une quelconque des revendications précédentes, dans lequel la taille de particule du mélange obtenu à partir du broyeur (100) est inférieure à 10 mm.
